# FASCICULE DE BREVET EUROPEEN

(11) **EP 0 936 955 B1**
(45) Date de publication et mention de la délivrance du brevet: **02.07.2003**
(21) Numéro de dépôt: 97912280.1
(22) Date de dépôt: 29.10.1997
(51) Int. Cl.: B23K 1/00, B23K 11/31

(54) **DISPOSITIF DE SUSPENSION D'UN POSTE A PINCE DE SOUDAGE A COMMANDE MANUELLE DANS UNE CHAINE D'ASSEMBLAGE**
VORRICHTUNG ZUM HÄNGEN EINER MANUELL KONTROLLIERTEN STATION FÜR SCHWEISSZUNGEN IN EIN FLIESSBAND
DEVICE FOR HANGING A MANUALLY CONTROLLED STATION FOR WELDING TONGS IN AN ASSEMBLY LINE

(30) Priorité: 31.10.1996 FR 9613341; 25.03.1997 FR 9703607
(43) Date de publication de la demande: 25.08.1999
(73) Titulaire: Menage, Christine, 92200 Neuilly-sur-Seine (FR); Dawidowicz, Armand, 92200 Neuilly-sur-Seine (FR)
(72) Inventeur: De Bruyn, Gérard, 92160 Antony (FR); Beffrieu, Michel, 93460 Gournay (FR)
(74) Mandataire: Dawidowicz, Armand
(86) Numéro de dépôt international: FR9701940
(87) Numéro de publication internationale: WO98018590

(56) Documents cités:
- EP-A- 0 515 069
- EP-A- 0 685 290
- DE-A- 4 323 517
- DE-A- 19 623 265
- DE-B- 1 150 789
- DE-U- 9 005 779
- US-A- 2 868 043
- US-A- 3 608 578
- US-A- 4 969 625
- US-A- 5 367 924
- PATENT ABSTRACTS OF JAPAN vol. 004, no. 041 (M-005), 29 Mars 1980 & JP 55 014177 A (KAWASAKI HEAVY IND LTD), 31 Janvier 1980,
- PATENT ABSTRACTS OF JAPAN vol. 008, no. 136 (M-304), 23 Juin 1984 & JP 59 037006 A (TOKYO SHIBAURA DENKI KK), 29 Février 1984, cité dans la demande

## Description

La présente invention concerne le domaine des chaînes d'assemblage, en particulier de véhicules automobiles. Dans de telles chaînes, on utilise de nombreux outils à commande manuelle alimentés en électricité et/ou en fluide. Un exemple d'un tel outil est un poste à pince de soudage qui comporte, en plus de la pince de soudage elle-même, divers autres composants tels qu'une commande programmable de soudage, un transformateur de soudage, un contacteur statique à thyristors, etc.

Jusqu'à présent, pour autoriser les déplacements d'une pince de soudage nécessaires au processus de fabrication, il était usuel de suspendre ladite pince de soudage et ses accessoires à des rails de roulement, lesquels sont fixés à la charpente de l'usine d'assemblage par des sous-charpentes démontables. Une telle installation nécessite un accrochage au sol de la pince de soudage, au moyen d'un pied d'accrochage, et un système de détection associé.

L'ensemble de la sous-charpente portant les rails de roulement doit être construit en fonction de la chaîne d'assemblage à implanter, de sorte qu'un démontage est nécessaire pour l'implantation d'une nouvelle chaîne avec son système spécifique de rails. Ces opérations sont longues et coûteuses, la structure constituée par la sous-charpente et les rails de roulement étant elle-même onéreuse de conception, de fabrication et de montage.

Une modification de la chaîne d'assemblage est extrêmement difficile et coûteuse.

Un autre inconvénient du système connu qui vient d'être décrit réside en une grande difficulté à réutiliser dans une nouvelle chaîne le matériel ainsi implanté du fait de la définition spécifique du poste de travail suspendu.

Les réparations et les échanges de composant sont également délicats du fait de la suspension d'une unité de travail qui doit de ce fait être la plus intégrée possible.

On connaît également plusieurs dispositifs de suspension d'outils à commande manuelle.

Ainsi, par le document JP-A-59037006, on connaît un poste de travail pour un outil de perçage dans lequel ledit outil est porté par un fût suspendu à une potence le long de laquelle ledit fût est déplaçable. Cette potence est en outre liée à une extrémité à un tronc reposant sur le sol et autour duquel elle est entraînable en déplacement.

Un tel dispositif nécessite en premier lieu un contrepoids sur le fût lui-même de manière à contrebalancer le poids de l'outil de perçage puis nécessite une fixation parfaite du tronc central portant la potence. En effet, lorsqu'on amène ledit fût à l'extrémité de la potence, ceci peut générer une force d'arrachement du tronc central qu'il convient de prévenir par une bonne fixation. Une fois l'outil de perçage amené au voisinage de l'objet à percer, reconnu par un aimant électromagnétique, on positionne correctement cet outil de perçage. Ce positionnement s'effectue manuellement par manipulation de manettes propres à déplacer ledit outil d'avant en arrière, de haut en bas et de gauche à droite.

L'outil en question étant un outil de perçage, il est nécessaire d'obtenir un positionnement précis dudit outil. Cependant, dans le cas d'une pince de soudage, il est au contraire important de ménager une complète liberté de manipulation en déplacement dudit outil par l'utilisateur et un tel dispositif ne peut alors être appliqué à un poste de soudage.

On connaît également, par US-A-4 969 625, un dispositif d'outils à commande manuelle, en particulier un dispositif d'agrafage dans lequel on prévoit des moyens d'entraînement en déplacement dudit outil en va-et-vient, latéralement, en avant et en arrière et verticalement ainsi que d'entraînement en rotation. Ces moyens sont ménagés sur un axe longitudinal dont une extrémité est fixée sur un mât vertical présentant une plaque de positionnement et dont l'autre extrémité porte l'outil. Le dispositif comporte en outre des moyens de réaction à la torsion et des moyens de fixation du mât sur un plan de travail. Cependant, ce dispositif présente une structure particulièrement compliquée et rigide qui ne laisse pas non plus une complète liberté de manipulation et de déplacement à l'utilisateur.

Le dispositif décrit dans US-A-3 608 578 concerne également un dispositif pour outils à mains dans lequel un mât est monté sur un établi et comporte une flèche. Cette flèche comporte un mécanisme de transport qui se déplace le long de celle-ci et qui porte un dispositif d'équilibrage présentant un câble auquel est fixé l'outil. Pour entraîner l'outil en déplacement jusqu'à la position de travail désiré, il convient donc de tirer sur le câble. Cette flèche est montée pivotante autour du mât et comporte à son autre extrémité un filtre et un lubrificateur raccordés par un tuyau à une source d'air comprimé.

Ce filtre et ce lubrificateur peuvent servir également de contrepoids au dispositif d'équilibrage de l'outil. Cependant, le positionnement de ces organes empêche ceux-ci d'être trop volumineux et, en outre, lors d'opérations d'entretien ou de réparations, ces organes ne sont pas d'un accès facile.

Dans le document US-A-5 367 924, on décrit un dispositif de bras-support pour une visseuse. Ce bras-support permet d'éviter la transmission de la force de rotation générée par la visseuse aux mains et aux poignets de l'opérateur. Ce bras-support se déplace en particulier le long d'un axe transversal d'un châssis suspendu. Cependant, un tel dispositif est limité dans sa liberté de manipulation en déplacement par l'opérateur.

Dans le document DE-A-19623265, publié postérieurement à la demande sous la priorité de laquelle la présente demande a été déposée, on décrit un dispositif de suspension d'une pince de soudage comportant une colonne fixée au sol sur laquelle est monté, pivotant autour, un bras. La pince de soudage est montée articulée, déplaçable verticalement et en avant et en arrière à l'aide d'un dispositif d'équilibrage. La pince est également montée sur des rails de roulement montés parallèles l'un à l'autre et perpendiculaires au bras lui-même de sorte que ladite pince se déplace à gauche et à droite.

Le transformateur de soudage est également monté sur la flèche suffisamment haut pour que le personnel utilisateur puisse passer dessous sans se blesser. Aussi, quant on entraîne en pivotement la flèche autour de la colonne au cours de différentes manipulations, cet entraînement peut être difficile du fait du poids du transformateur de soudage tandis que l'entraînement en déplacement à droite et à gauche est limité par la longueur des rails de roulement.

Le document DE-A-43235517 décrit un dispositif selon le préambule de la revendication 1.

La présente invention vise à supprimer ces inconvénients des systèmes connus.

A cet effet, l'invention a pour objet un dispositif selon la revendication 1.

Le système d'accrochage et d'équilibrage de la pince de soudage peut être fixe par rapport audit bras articulé ou il peut coulisser le long dudit bras articulé.

De manière avantageuse, la potence peut être fixe par rapport au fût ou bien, en variante, la potence peut être montée rotative autour de l'axe du fût.

Ainsi, un dispositif selon l'invention permet une manipulation améliorée de la pince de soudage, en particulier afin d'améliorer l'ergonomie pour des postes difficiles, dans la mesure où le bras articulé monté sur la potence est entraînable en pivotement autour d'un axe parallèle au fût, de préférence son axe de fixation à l'extrémité de ladite potence, ce qui offre un degré supplémentaire de liberté pour le déplacement de la pince de soudage même lorsque la potence est fixe par rapport au fût.

Et dans le cas où la potence est entraînable en rotation autour du fût, le bras articulé offre une liberté supplémentaire de mouvement pour manipuler la pince de soudage, sans qu'il soit nécessaire d'entraîner en rotation toute la potence autour du fût, en particulier lorsque celle-ci porte au moins un composant du poste.

De préférence, la potence d'un tel dispositif n'est pas surchargée par l'ensemble des divers composants et accessoires du poste de soudage. Cette potence peut donc être plus facilement entraînée en rotation autour du fût, la charge de ladite potence et son inertie étant réduites.

En outre, la fixation séparée des divers composants et accessoires du poste de soudage autres que la pince elle-même sur le fût et/ou la potence permet également une manutention et un entretien facilités, en particulier un remplacement des composants plus simple que lorsqu'ils sont sous une forme intégrée, par exemple réunis dans un même boîtier.

Il est encore possible de prévoir en outre que l'organe d'accrochage est mobile en translation le long de la potence.

Le dispositif selon l'invention permet d'obtenir une structure de support d'outillages lourds qui est d'implantation souple et économique sous forme d'une chaîne de montage/assemblage, en ne nécessitant pratiquement pas de travaux d'infrastructure sur le bâtiment. Les dispositifs selon l'invention peuvent être réutilisés, éventuellement après reconditionnement ou être obtenus à partir de composants récupérés et réutilisés sous cette forme.

En particulier, la fixation séparée des éléments du poste, autres que la pince elle-même, sur le fût et/ou sur la potence permet une répartition des masses au voisinage de l'axe du fût, ce qui entraîne l'utilisation d'une platine ou semelle de fixation de surface relativement faible et une fixation de cette semelle par un nombre très limité de points d'ancrage au sol.

L'invention sera bien comprise à la lecture de la description suivante, en référence au dessin annexé dans lequel :
la figure 1 est une vue schématique en élévation latérale d'un dispositif de support d'un poste à pince de soudage selon un exemple de réalisation de l'invention, et
la figure 2 montre un dispositif illustratif qui n'est pas un mode de réalisation de l'invention et n'est pas couvert par les revendications.

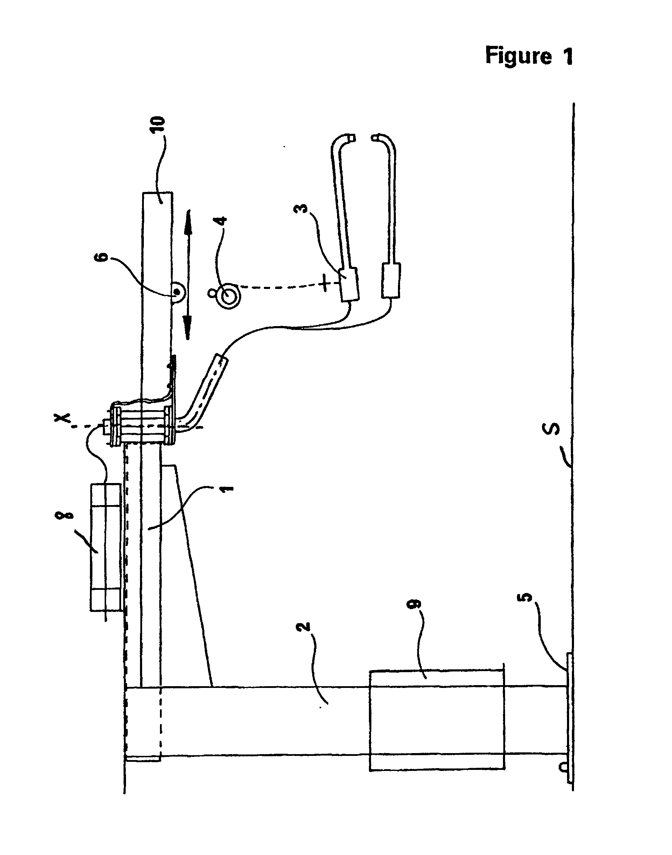

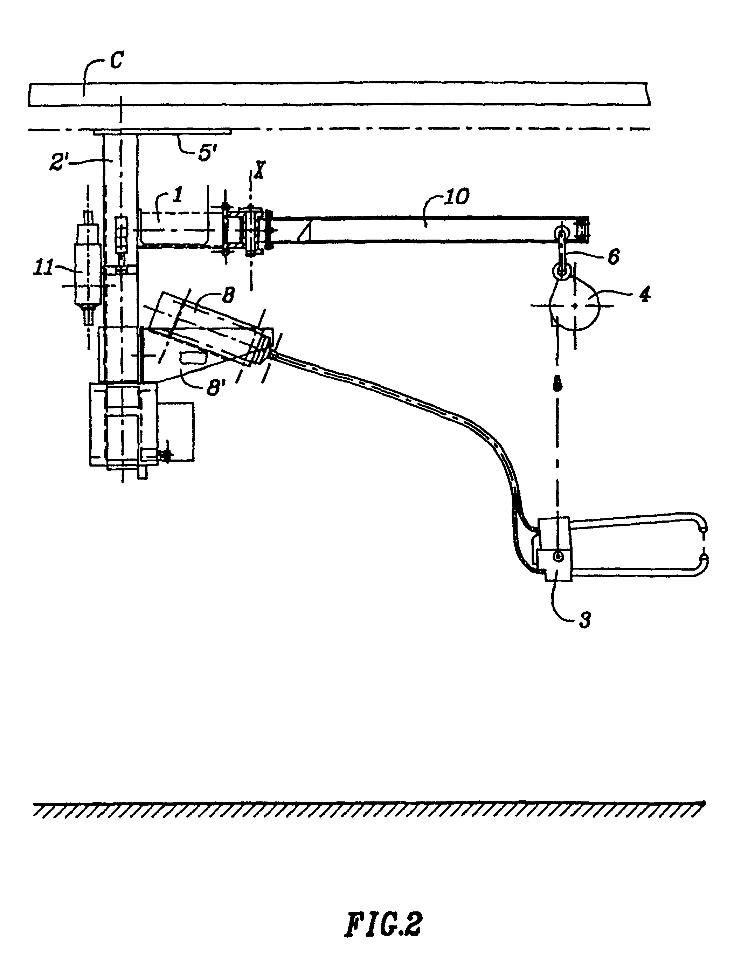

Le dispositif de support selon l'invention, tel que représenté schématiquement à la figure 1, l'exemple illustratif de la figure 2 comprennent une potence 1 solidaire respectivement d'un fût 2 reposant sur le sol S ou d'un fût 2' fixé sur une charpente C. La potence 1 présente à son extrémité libre un bras articulé 10. Une pince de soudage 3 est reliée au bras articulé 10, par exemple par un équilibreur 4 ou similaire, de manière à être mobile verticalement.

Le bras 10 est articulé à l'extrémité de la potence 1 par entraînement en rotation autour d'un axe parallèle au fût 2 ou 2', de préférence son axe de fixation X sur ladite potence 1.

Dans une forme de réalisation simple, la pince 3 est fixe en translation par rapport au bras articulé 10 et la potence 1 est fixe par rapport au fût 2 ou 2'.

Il est également possible d'envisager une variante dans laquelle la potence 1 peut pivoter autour de l'axe du fût 2 ou 2'. Il suffit à cet effet que le fût 2 ou 2' soit monté pivotant autour de son axe, au moyen d'un palier, par rapport à une platine 5 de liaison au sol S ou une platine 5' de liaison à la charpente C. Ce pivotement pourra être limité par des butées, par exemple des butées en caoutchouc ou des amortisseurs hydrauliques d'inertie, disposées en correspondance sur le fût 2, 2' et/ou sur son axe de rotation (non représenté). On peut prévoir des butées réglables ou déplaçables pour ajuster le débattement angulaire à l'application envisagée et à l'ergonomie de l'outil.

Une variante plus sophistiquée peut prévoir une possibilité de coulissement horizontal de la pince 3 par déplacement linéaire de sa fixation 6 le long du bras articulé 10.

La platine 5 ou 5' peut revêtir diverses formes de réalisation.

Ainsi, dans une première forme de réalisation, la platine 5 est fixée au sol S par des moyens d'ancrage, tels que des chevilles chimiques. L'ajustage de niveau pourra par exemple être réalisé par des vis vérins.

Dans une deuxième forme de réalisation, la platine 5 comporte des fourreaux pour le chargement et le déplacement par la fourche d'un chariot élévateur. La fixation et le réglage sont ensuite effectués comme dans la première forme de réalisation.

Quant à la platine 5', elle est, de préférence, fixée à la charpente C par des moyens d'ancrage mécaniques tels que des crapauds ou des boulons.

Dans tous les cas, l'équilibrage de la pince 3 peut être réalisé au moyen d'un équilibreur connu disponible dans le commerce ou par un système à câble, poulies et contrepoids, le contrepoids coulissant dans le fût 2, 2' et réglable par addition ou suppression de masses.

Le dispositif selon l'invention permet la suppression des sous-charpentes et des rails de roulement, et offre l'avantage de permettre de fixer et d'intégrer divers composants et accessoires sur le fût 2, 2' et/ou sur la potence 1.

C'est ainsi que, pour la pince de soudage 3, tel que représenté à la figure 1, le transformateur 8 est implanté dans un berceau sur la potence 1, alors que l'armoire électrique 9, le panneau fluide (refroidissement, surpresseur, vanne proportionnelle, distributeur, etc.) et la commande programmable sont fixés sur le fût 2.

Dans le dispositif représenté à la figure 2, le transformateur 8 est implanté dans un berceau 8' sur le fût 2' et l'armoire électrique, le panneau fluide (refroidissement, surpresseur 11, vanne proportionnelle, distributeur, etc.) et la commande programmable sont fixés sur le fût 2'.

Le choix des composants et leur remplacement sont ainsi grandement facilités. Mais, en outre, on peut prévoir de monter sur le même support deux outils utilisés en alternance et qui utiliseront, au moins en partie, les mêmes accessoires.

Le dispositif selon l'invention peut être équipé de capteurs ou de détecteurs pour le contrôle des positions diverses que peut occuper la pince 3, selon les divers modes de réalisation choisis.

## Revendications

1. Dispositif de support d'un poste à pince de soudage (3) suspendue dans une chaîne de fabrication/assemblage. constitué par une potence (1) munie d'au moins un organe d'accrochage (6) d'une pince (3) et de moyens d'équilibrage (4) de ladite pince (3) en position verticale, ladite potence (1) étant solidaire d'un fût (2), le transformateur (8), l'armoire électrique (9), le panneau fluide et la commande programmable étant fixés sur le fût (2), et/ou la potence (1),
**caractérisé en ce que** la potence (1) présente en outre à son extrémité libre un bras (10) portant le système d'accrochage et d'équilibrage (4, 6) de la pince (3) et articulé sur la potence (1) autour d'un axe parallèle au fût (2.) et **en ce que** le fût (2) est fixé au sol par l'intermédiaire d'une platine (5), par des moyens d'ancrage tels que des chevilles chimiques.

2. Dispositif selon la revendication 1,
**caractérisé en ce que** le système d'accrochage et d'équilibrage (4. 6) coulisse le long du bras articulé (10)

3. Dispositif selon la revendication 1,
**caractérisé en ce que** le système d'accrochage et d'équilibrage (4, 6) est fixe par rapport au bras articulé (10)

4. Dispositif selon l'une des revendications 1 à 3,
**caractérisé en ce que** la potence (1) est fixe par rapport au fût (2).

5. Dispositif selon l'une des revendications 1 à 3,
**caractérisé en ce que** la potence (1) est montée rotative autour de l'axe du fût (2).

6. Dispositif selon la revendication 5,
**caractérisé en ce qu'**il comprend des butées, par exemple des butées en caoutchouc ou des amortisseurs hydrauliques d'énergie, disposés sur le fût (2) et/ou son axe de pivotement pour limiter le débattement angulaire de la potence (1).

7. Dispositif selon l'une des revendications 1 à 6,
**caractérisé en ce qu'**il comprend des moyens d'ajustage de niveau tels que des vis vérins.

8. Dispositif selon l'une des revendications 1 à 7,
**caractérisé en ce que** les moyens d'équilibrage sont constitués par un équilibreur (4).

9. Dispositif selon l'une des revendications 1 à 7,
**caractérisé en ce que** les moyens d'équilibrage sont constitués par un système à câble, poulies et contrepoids, le contrepoids coulissant dans le fût (2) et réglable par addition ou suppression de masses.

10. Dispositif selon l'une des revendications 1 à 9,
**caractérisé en ce qu'**il est équipé de capteurs ou de détecteurs pour le contrôle des positions diverses que peut occuper la pince (3).

11. Dispositif selon l'une des revendications 1 à 10,
**caractérisé en ce qu'**il est agencé pour porter plusieurs pinces (3) utilisables en alternance et utilisant au moins partiellement les mêmes composants (8, 9, 11).

## Patentansprüche

1. Trägervorrichtung für eine in eine Fertigungs-/ Montagestraße eingehängte Station mit einer Schweißzange (3), bestehend aus einem Ausleger (1) mit wenigstens einem Aufhängeorgan (6) zum Aufhängen einer Schweißzange (3) und Ausgleichsmitteln (4) für den Gewichtsausgleich der besagten Schweißzange (3) in vertikaler Position, wobei der besagte Ausleger (1) fest mit einem Schaft (2) verbunden ist, wobei der Transformator (8), der Schaltschrank (9), die Fluidtafel und die programmierbare Steuerung am Schaft (2) und/oder am Ausleger (1) befestigt sind,
**dadurch gekennzeichnet, daß** der Ausleger (1) außerdem an seinem freien Ende einen Arm (10) aufweist, der das Aufhänge- und Ausgleichsystem (4, 6) für die Schweißzange (3) trägt und am Ausleger (1) um eine zum Schaft (2) parallele Achse angelenkt ist, und d a β der Schaft (2) am Boden über eine Tragplatte (5) anhand von Verankerungsmitteln, wie etwa von chemischen Dübeln, befestigt ist.

2. Vorrichtung nach Anspruch 1,
**dadurch gekennzeichnet, daß** das Aufhänge- und Ausgleichsystem (4, 6) am Gelenkarm (10) entlang verschiebbar gelagert ist.

3. Vorrichtung nach Anspruch 1,
**dadurch gekennzeichnet, daß** das Aufhänge- und Ausgleichsystem (4, 6) im Verhältnis zum Gelenkarm (10) ortsfest gelagert ist.

4. Vorrichtung nach einem der Ansprüche 1 bis 3,
**dadurch gekennzeichnet, daß** der Ausleger (1) im Verhältnis zum Schaft (2) ortsfest gelagert ist.

5. Vorrichtung nach einem der Ansprüche 1 bis 3,
**dadurch gekennzeichnet, daß** der Ausleger (1) drehbar um die Achse des Schafts (2) gelagert ist.

6. Vorrichtung nach Anspruch 5,
**dadurch gekennzeichnet, daß** sie Anschläge, zum Beispiel Gummianschläge oder hydraulische Energiedämpfer umfaßt, die am Schaft (2) und/oder seiner Drehachse angeordnet sind, um die Winkelauslenkung des Auslegers (1) zu begrenzen.

7. Vorrichtung nach einem der Ansprüche 1 bis 6,
**dadurch gekennzeichnet, daß** sie Höheneinstellmittel, wie etwa Schraubenwinden, umfaßt.

8. Vorrichtung nach einem der Ansprüche 1 bis 7,
**dadurch gekennzeichnet, daß** die Ausgleichmittel aus einer Ausgleicheinrichtung (4) bestehen.

9. Vorrichtung nach einem der Ansprüche 1 bis 7,
**dadurch gekennzeichnet, daß** die Ausgleichmittel aus einem System mit Seil, Seilrolle und Gegengewicht bestehen, wobei das Gegengewicht im Schaft (2) verschiebbar gelagert und durch Hinzufügung oder Wegnahme von Massen verstellbar ist.

10. Vorrichtung nach einem der Ansprüche 1 bis 9,
**dadurch gekennzeichnet, daß** sie mit Sensoren oder Gebern für die Kontrolle der unterschiedlichen Positionen ausgerüstet ist, welche die Schweißzange (3) einnehmen kann.

11. Vorrichtung nach einem der Ansprüche 1 bis 10,
**dadurch gekennzeichnet, daß** sie so angeordnet ist, daß sie mehrere Schweißzangen (3) tragen kann, die abwechselnd benutzbar sind und die wenigstens teilweise die gleichen Komponenten (8, 9, 11) verwenden.

## Claims

1. A support device for controlled welding tongs station (3) suspended in a manufacturing/assembly line, formed by a bracket (1) equipped with at least one suspension member (6) for a tongs (3) and means for balancing (4) the said tongs (3) in a vertical position, the said bracket (1) being integral with a post (2), the transformer (8), the switch box (9), the fluid panel and the programmable controller being fixed on the post (2) and/or the bracket (1), **characterized in that** the bracket further comprises an arm (10) at its free end which carries the suspension and balancing system (4, 6) of the tongs (3) and is articulated to the bracket (1) about an axis parallel to the post (2), and **in that** the post (2) is fixed to the ground by way of a plate (5) by anchoring means such as chemical anchor bolts.

2. A device according to claim 1, **characterized in that** the suspension and balancing system (4, 6) slides along the articulated arm (10).

3. A device according to claim 1, **characterized in that** the suspension and balancing system (4, 6) is fixed relative to the articulated arm (10).

4. A device according to any of claims 1 to 3, **characterized in that** the bracket (1) is fixed relative to the post (2).

5. A device according to any of claims 1 to 3, **characterized in that** the bracket (1) is mounted rotatably about the axis of the post (2).

6. A device according to claim 5, **characterized in that** it that it comprises stops, for example stops of rubber or hydraulic shock absorbers, provided on the post (2) and/or its pivotal axis for limiting the angular excursion of the bracket (1).

7. A device according to any of claims 1 to 6, **characterized in that** it comprises means for adjusting the level, such as screw jacks.

8. A device according to any of claims 1 to 7, **characterized in that** the balancing means are formed by a stabiliser.

9. A device according to any of claims 1 to 7, **characterized in that** the balancing means are formed by a cable, pulley and counterweight system, the counterweight sliding in the post (2) and being adjustable by adding or removing mass.

10. A device according to any of claims 1 to 9, **characterized in that** it is fitted with sensors or detectors for controlling various positions which the tongs (3) can occupy.

11. A device according to any of claims 1 to 10, **characterized in that** it is arranged to carry a plurality of tongs (3) usable alternatively and using at least partially the same components (8, 9, 10).
